# EUROPÄISCHE PATENTSCHRIFT

(11) **EP 1 768 493 B1**
(45) Veröffentlichungstag und Bekanntmachung des Hinweises auf die Patenterteilung: **10.04.2013**
(21) Anmeldenummer: 05746290.5
(22) Anmeldetag: 14.05.2005
(51) Int. Cl.: A23C 7/04, A01J 11/10, B04B 11/02

(54) **SEPARATOR UND VERFAHREN ZUR ENTKEIMUNG VON ROHMILCH ODER MOLKE**
SEPARATOR AND METHOD FOR DISINFECTING RAW MILK OR WHEY
SÉPARATEUR ET PROCÉDÉ DE PASTEURISATION DE LAIT CRU OU DE PETIT-LAIT

(30) Priorität: 21.07.2004 DE 102004035223
(43) Veröffentlichungstag der Anmeldung: 04.04.2007
(73) Patentinhaber: GEA Mechanical Equipment GmbH, 59302 Oelde (DE)
(72) Erfinder: ZETTIER, Karl-Heinz, 59302 Oelde (DE); UPHUS, Arnold, 59302 Oelde (DE); HÜLLMANN, Markus, 33378 Rheda-Wiedenbrück (DE)
(74) Vertreter: Dantz, Jan Henning
(86) Internationale Anmeldenummer: PCT/EP2005/005304
(87) Internationale Veröffentlichungsnummer: WO 2006/007894

(56) Entgegenhaltungen:
- DE-C1- 3 826 461
- DE-C1- 10 036 085
- US-A- 4 074 622

## Beschreibung

Die Erfindung betrifft einen Separator zur Entkeimung von Rohmilch oder Molke nach dem Oberbegriff des Anspruchs 1 und ein Verfahren zum Betreiben eines derartigen Separators.

In vielen lebensmittelverarbeitenden Unternehmen werden Separatoren für unterschiedlichste Applikationen und Leistungsspektren eingesetzt. Die Separatoren müssen i.allg. hinsichtlich ihrer Konstruktion und Auslegung an diese Applikationen und Leistungsspektren angepasst werden. Sie sind damit zwar innerhalb des vordefinierten Aufgabenfeldes bzw. Prozesses einsetzbar, reagieren aber auf Abweichungen aus dem vorgegeben Rahmen - so auf Leistungsveränderungen oder Veränderungen der Zusammensetzung der zu verarbeitenden Produkte empfindlich bzw. vielfach mit Störungen.

Die US 4,074,622 offenbart einen Separator zur Trennung von Rohmilch in Rahm und Magermilch, die durch zwei unterschiedliche Abläufe abgeführt werden. Zur Standardisierung der Milch, bzw. zur Einstellung des Rahmgehaltes, wird abgetrennter Rahm im Anschluss an die zentrifugale Trennung durch ein Zweiwegeventil der Magermilch wieder zugeführt. Eine automatische Kontrolleinheit bestimmt dabei den Rahmgehalt der Milch und die Abweichungen des Rahmgehalts von einem Sollwert, so dass die Differenz an Rahm nachdosiert werden kann. Da die Bestimmung des Rahmgehalts ein. Da die Bestimmung des Rahmgehalts einige Sekunden dauert, ist zwischen der Stelle der Probenentnahme und der Zudosiereinrichtung für den Rahm eine Rezirkulationsschleife vorgesehen, damit die Magermilch nicht ohne Standardisierung den Separator verläßt.

Die DE 38 26 461 offenbart ein Verfahren zur zentrifugalen Entkeimung, bei dem ein keimarmes Konzentrat durch Düsen von einem mittleren Bereich eines Konzentratraumes der Trommel abgezogen wird. Dieses Konzentrat wird durch eine Rückführleitung, die mit dem Zulauf verbunden ist, der unbearbeiteten Milch zugeführt. Durch diese Rückführung eines Teilstroms an keimarmer Milch kann ein konstanter Volumenstrom und eine konstante Leistung der Entkeimungszentrifuge, trotz Abführen von Keimkonzentraten ermöglicht werden.

Im Bereich der Entkeimungsseparatoren wird Milch von Sporen und/oder Keimen geklärt. Dabei hat sich die Nennleistung der eingesetzten Entkeimungsseparatoren in den vergangenen Jahren immer weiter vergrößert. Dem Markt stehen derzeit Separatoren mit verschiedensten Leistungen von z.B. 500 1/ h bis 50.000 l/h zur Verfügung, wobei der Tellerdurchmesser derzeit bei den größeren Maschinen bis zu 500 mm erreicht.

Für eine gute Entkeimungseffizienz ist es wichtig, dass ein genügend großer Flüssigkeitsstrom Bakterien in ein Zentrifugalfeld transportiert. Um dies zu gewährleisten, ist aus dem Stand der Technik eine Rezirkulation einer Schleppflüssigkeit bekannt. Dabei wird an einer Stelle mit genügender Zentrifugalkraft die Schleppflüssigkeit umgelenkt und dann über einen Scheideteller abgeführt. In der Regel entspricht diese Schleppflüssigkeit, die in den Zulauf des Separators rezirkuliert wird, bakteriologisch in etwa der Rohmilch und wird direkt in den Zulauf des Separators zurückgelenkt. Die zurückgeführte Menge beträgt bezogen auf die Zulaufmenge in etwas 3 - 5 %. Die Menge an Schleppflüssigkeit ist regelbar und soll nicht mehr als das zweifache Keimzahl der Rohmilch aufweisen. Über einen Feststoffaustrag wird dagegen das eigentliche Sporen- und Bakterienkonzentrat ausgetragen.

Dieses Verfahren hat sich an sich bewährt. Problematisch ist es jedoch, dass sich trotz dieser Rezirkulation insbesondere bei Maschinen mit größerer Nennleistung der Effekt einstellt, dass eine besonders deutliche Verringerung, beispielsweise eine Halbierung der Zulaufleistung auf die Hälfte der Nennleistung das Ergebnis der Entkeimung verschlechtern kann. Dieser Effekt, der bei kleineren Maschinen nicht oder nur in einem nicht störenden Umfang auftritt, führt dazu, dass die größeren Maschinen zwar sehr gut im Bereich ihrer Nennleistung, aber nur in eingeschränkterem Maße in deutlich geringeren Leistungsbereichen einsetzbar sind.

Gegenüber dem vorstehend beschriebenen Stand der Technik ist es die Aufgabe der Erfindung, die Klärwirkung von Klärseparatoren bei der Entkeimung von Rohmilch oder Molke zu erhöhen.

Die Erfindung löst diese Aufgabe in Hinsicht auf den Separator durch den Gegenstand des Anspruchs 1 und in Hinsicht auf das Verfahren durch den Gegenstand des Anspruchs 6.

Nach Anspruch 1 schafft die Erfindung einen Separator mit zwei Rezirkulationsschaltungen zwischen den zwei Abläufen und dem Zulauf der Separatortrommel.

Dabei ist die eine Rezirkulationsschaltungen zur Rezirkulation einer Schleppflüssigkeit bei der Entkeimung von Milch ausgelegt und weist eine Rezirkulationsleitung vom Ablauf der Zentrifuge für Schleppflüssigkeit zum Zulauf der Zentrifuge auf und die andere der Rezirkulationsschaltungen ist zur Rezirkulation eines Teiles der entkeimten Milchphase bei der Entkeimung von Milch ausgelegt und weist eine weitere Rezirkulationsleitung vom Ablauf der Zentrifuge für entkeimte Milch zum Zulauf der Zentrifuge auf, wobei in die Rezirkulationsschaltungen und -leitungen vorzugsweise jeweils ein steuer- und/oder regelbares Ventil integriert ist.

Nach einer weiteren bevorzugten Varianten ist zudem eine Steuerungs- oder Regelungseinrichtung zum Konstanthalten der vom Separator verarbeiteten Produktmenge durch eine Regelung der Rezirkulationsschaltungen vorgesehen.

Nach der Erfindung wird die an sich bekannte vorteilhafte Rezirkulationsschaltung für Schleppflüssigkeit um eine weitere Rezirkulationsleitung bzw. Rezirkulationsschaltung für geklärte (insbesondere entkeimte) Molke ergänzt, mit welcher die geklärte Molke in den Zulauf zurückgeleitet wird. Dies hat folgenden Vorteil. Wird die Durchsatzleistung geringer, wird durch die Erfindung der Entkeimungseffekt auf einem hohen Niveau stabilisiert oder sogar verbessert. Wird die Leistung z.B. auf die Hälfte reduziert, könnte man theoretisch sogar von einer "Doppelentkeimung" sprechen, da die Durchströmung der Trommel doppelt so lange dauert wie bei der "Einfachentkeimung".

In der Praxis ist eine Verbesserung der Entkeimung an sich nach dem Stand der Technik nur möglich, wenn auch die Konstruktion der Trommel - also die durchströmten Teile - an die verringerte Leistung angepasst wird, denn ansonsten können Produktschädigungen auftreten sowie eine Entgasung der Milch im Zulaufbereich sowie eine damit einhergehende teilweise Blockierung des Milchstromes. Um diese Probleme zu vermeiden, wäre es daher an sich nötig Ablauf, Greifer, Verteiler, Ein- und Auslaufbereich, Konzentratleistung usw. des Separators an die veränderte Leistung anzupassen. All diese Nachteile vermeidet die zweite Rezirkulationsleitung auf einfache Weise.

Mit der zweiten Rezirkulationsleitung wird bei einem Entkeimungsseparator also die Zulaufleistung reduzierbar oder u.U. bei kleineren Maschinen auch eine Art "Doppelentkeimung" durchführbar, wobei zum Stabilhalten des Zulaufvolumens an Molke die zweite Rezirkulationsleitung aktivierbar ist. Dabei wird die Leistung so gewählt, dass eine Verringerung der Zulaufmenge durch die Rezirkulation ausgeglichen wird. Hierdurch wird gewährleistet, daß der einmal eingestellte Druckbereich nicht verlassen wird. Die Greifer bzw. Schälscheiben fördern immer im optimalen Bereich. Durch die gleichen Zulaufverhältnisse durch das zweimalige Durchströmen der Flüssigkeit durch die Trommel wird eine stabile und verbesserte Entkeimung von unter 50 Sporen pro Liter auch bei niedrigen Leistungen erreicht.

Die Erfindung schafft daneben auch ein Verfahren zum Betreiben eines erfindungsgemäßen Klärseparators, bei dem mittels einer Steuerungs- oder Regelungseinrichtung eine Regelung der vom Separator verarbeiteten Produktmenge durch eine Steuerung oder Regelung der Menge an rezirkulierter Produktphase in den Zulauf der Separatortrommel derart erfolgt, dass der Separator unabhängig von Variationen der Zulaufmenge an Milchprodukt unter-hydraulisch gleichbleibenden Bedingungen (gleiche Strömungsverhältnisse in der Trommel) arbeitet, wobei mittels einer Rezirkulation von aus der Separatortrommel abgeleiteter geklärter Milch bei optionaler Rückführung einer Schleppflüssigkeit der Separator im Bereich einer optimalen Klärwirkung betrieben wird.

An dieser Stelle sei noch auf folgenden Stand der Technik verwiesen, der verschiedene Verfahren zur Verarbeitung von Milchprodukten betrifft, sich aber nicht mit der Lösung des eingangs genannten, bei der Entkeimung mit Separatoren auftretenden Problematik befasst.

Aus der DE 100 36 085 ist es bekannt, mit einem Klärseparator bei der Entkeimung von Molke die Rohmolke in die Bestandteile Rahm, entrahmte Molke (Magermilch) und Feststoffe (Schlamm mit Keimen) zu trennen, wobei die Zentrifugaltrennung im Separator derart erfolgt, dass der Fettgehalt in dem Rahm mehr als 45 Prozent beträgt. Daraufhin wird die Magermilch entkeimt und danach in den Rahm, der keiner weiteren Entkeimung unterzogen wurde, zurückgeleitet und das bei der Rückleitung der Magermilch in den Rahm entstehende Rahm/Magermilchgemisch pasteurisiert. Auf eine Hocherhitzung auf bis zu 135 °C kann mit diesem Verfahren verzichtet werden.

Aus der DE 198 07 294 ist eine Entrahmungsstation mit einem Klärseparator und einem diesem nachgeschalteten Entrahmungsseparator bekannt, wobei eine Rezirkulationsleitung für Magermilch vom Ablauf des Entrahmungsseparators zum Zulauf des Klärseparators führt (eine Bypassleitung), um den Fettverlust gering zu halten und die Qualität des gewonnenen Käsestaubes zu verbessern.

Die DE 198 20 870 schlägt vor, bei der Molkeentrahmung mittels eines Separators eine Teilmenge von 0,5 % bis 2 % des ablaufenden Molkerahmes - also des mehr Fett enthaltenden Anteils - in die dem Separator zugeführte Rohmolke zurückzuleiten, um die Produktqualität zu verbessern.

Nachfolgend wird das erfindungsgemäße Verfahren beispielhaft unter Bezug auf die beigefügte Zeichnung näher erläutert: Es zeigt:
Fig. 1 eine schematische Darstellung einer Anlage zur Entkeimung von Milch; und
Fig.2 einen zum Einsatz bei dem erfindungsgemäßen Verfahren geeigneten Separator.

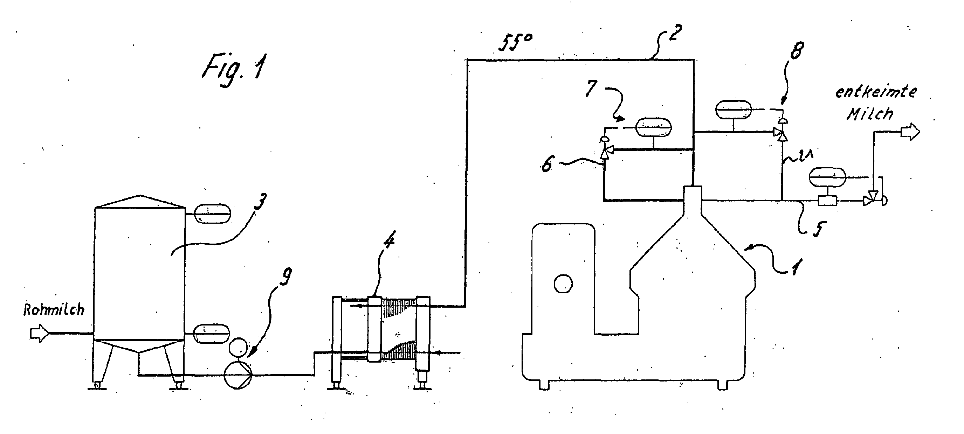

Fig. 1 zeigt einen Separator 1, dem durch eine Zuleitung 2 ein Ausgangsprodukt - insbesondere Rohmilch - direkt oder über ein Ventil 9, einen Tank 3 und/oder einen vorteilhaften Wärmetauscher 4 zum Erhöhen oder Konstanthalten der Temperatur zugeleitet wird (mit Pfeilen wird am Wärmetauscher der Durchfluss der Wärmetauscherflüssigkeit angedeutet). Die Rohmilch wird hier beispielhaft auf eine Temperatur von 55°C erhitzt.

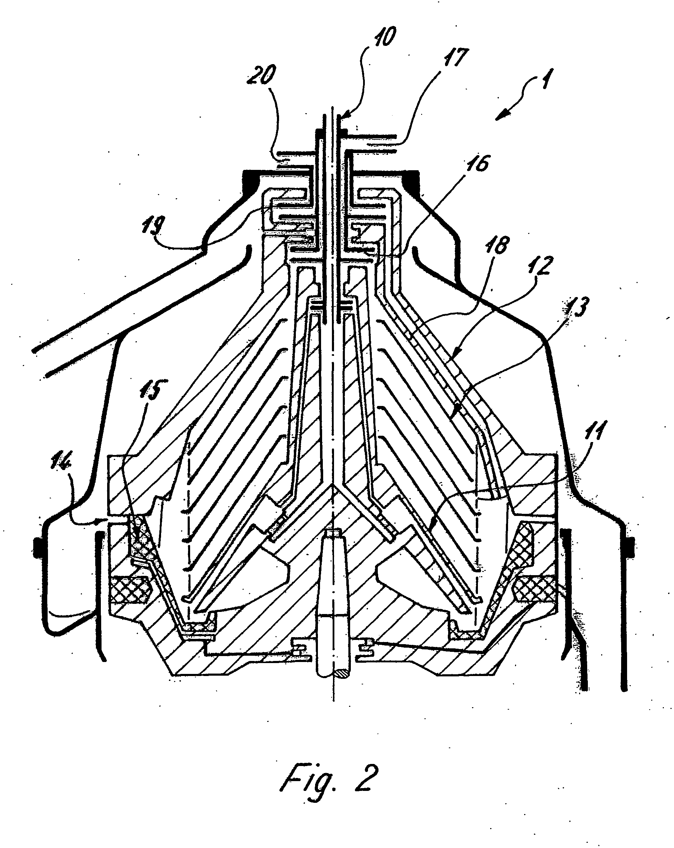

Der Separator 1 der Fig. 1 dient als Entkeimungsseparator bzw. ist als solcher ausgelegt. Ein derartiger Separator mit vertikaler Drehachse ist in Fig. 2 dargestellt.

Zugeführt wird die Rohmilch durch die Zuleitung der Fig. 1, die in das in die Trommel 12 führende Zuleitungsrohr 10 mündet, dem ein Verteiler 11 nachgeschaltet ist, durch welchen die Rohmilch in den Schleuderraum in der Trommel 12 mit einem Trenntellerstapeleinsatz 13 geleitet wird.

Mit dem Entkeimungsseparator 1 wird die Rohmilch von Keimen und/oder sonstige Verunreinigungen geklärt, die über Feststoffaustragsöffnungen 14 z.B. mittels eines Kolbenschieber-Schließmechanismus 15 aus der Trommel 12 des Separators 1 ausgetragen werden.

Die entkeimte Milch wird dagegen z.B. über einen ersten Greifer bzw. eine Schälscheibe 16 und einen diesem nachgeschalteten ersten Ablauf 17 und eine diesem wiederum nachgeschaltete erste Ablaufleitung 5 aus dem Entkeimungsseparators 1 abgeleitet.

Zur Optimierung des Entkeimungsprozesses und dabei insbesondere zum Verhindern eines Rückvermischens zwischen den Keimen und der entkeimten Milch in der Trommel 12 wird ein weiterer Flüssigkeitsanteil - Schleppflüssigkeit genannt - z.B. über einen Scheideteller 18 und einen zweiten Greifer bzw. eine zweite Schälscheibe 19 mit einem Ablauf 20 sowie eine weitere Ablaufleitung 6 aus der Trommel 12 des Separators 1 abgeleitet, der noch einen relativ großen Anteil an Keimen und/oder sonstigen Verunreinigungen aufweisen kann. Um dennoch den Produktverlust so gering wie möglich zu halten, ist die Ablaufleitung 6 als Rezirkulationsleitung ausgelegt, die in den Zulauf 2 der Separatortrommel mündet.

Zusätzlich weist auch die erste Ablaufleitung 5 für die entkeimte Milch eine Zweigleitung 21 auf, die als weitere Rezirkulationsleitung in den Produktzulauf 2 des Separators 1 mündet bzw. ausgelegt ist. Auf diese Weise kann durch eine Rezirkulation der entkeimten Milch auf einfache Weise die Zulaufleistung auch bei Schwankungen der Zulaufmenge oder im Falle einer nur sehr geringen Zulaufmenge auf einen Wert eingestellt werden, bei dem die Entkeimungswirkung des Separators optimal ist.

In die Rezirkulationsleitungen sind jeweils steuerbare Ventile 7, 8 integriert, um jeweils die Menge an rezirkulierter Schleppflüssigkeit und/oder an rezirkulierter entkeimter Milch steuern oder regeln zu können.

Die zu verarbeitende Rohmilch weist z.B. ca. 4,5 % Lactose, 3,5 % Fett und 3,5 % Eiweiß auf. Die Schleppflüssigkeit weist dagegen in der Regel gegenüber der zu verarbeitenden Rohmilch einen deutlich reduzierten Fettgehalt und einen erhöhten Eiweißgehalt auf.

### Bezugszeichen

- Separator: 1
- Zuleitung: 2
- Tank: 3
- Wärmetauscher: 4
- Ablaufleitung: 5, 6
- Ventile: 7, 8
- Ventil: 9
- Zuleitungsrohr: 10
- Verteiler: 11
- Trommel: 12
- Trenntellerstapeleinsatz: 13
- Feststoffaustragsöfmungen: 14
- Kolbenschieber-Schließmechanismus: 15
- Schälscheibe: 16
- Ablauf: 17
- Scheideteller: 18
- Schälscheibe: 19
- Ablauf: 20
- Zweigleitung: 21

## Patentansprüche

1. Separator (1) zur Entkeimung von Rohmilch oder Molke mit einer drehbaren Separatortrommel (12) mit vertikaler Drehachse sowie mit einem Tellerpaket (13) und wenigstens zwei Abläufen (17, 20) und wenigstens einem Zulauf (2), **gekennzeichnet durch** zwei Rezirkulationsschaltungen zwischen den beiden zwei Abläufen (17, 20) und dem Zulauf (2) der Separatortrommel, wobei die eine der Rezirkulationsschaltungen (6) zur Rezirkulation einer Schleppflüssigkeit und die andere der Rezirkulationsschaltungen (21) zur Rezirkulation eines Teiles der entkeimten Phase ausgelegt ist.

2. Separator nach Anspruch 1, **dadurch gekennzeichnet, dass** die eine Rezirkulationsschaltung zur Rezirkulation der Schleppflüssigkeit eine Rezirkulationsleitung (6) von dem ersten Ablauf (20) für Schleppflüssigkeit zum Zulauf (2) der Trommel aufweist und dass die zweite Rezirkulationsschaltung zur Rezirkulation der entkeimten Milch eine weitere Rezirkulationsleitung (5, 21) von dem Ablauf (17) für geklärte Milch zum Zulauf (2) aufweist.

3. Separator nach einem der vorstehenden Ansprüche, **dadurch gekennzeichnet, dass** in die Rezirkulationsleitungen (6; 5, 21) jeweils ein steuer- und/oder regelbares Ventil (7, 8) integriert ist.

4. Separator nach einem der vorstehenden Ansprüche, **gekennzeichnet durch** eine Steuerungs- oder Regelungseinrichtung zum Konstanthalten der vom Separator verarbeiteten Produktmenge **durch** eine Regelung der Durchflussmenge der Rezirkulationsleitungen (6; 5, 21).

5. Separator nach einem der vorstehenden Ansprüche, **gekennzeichnet durch**
a) Feststoffaustragsöffnungen (14),
b) einen ersten Greifer bzw. eine Schälscheibe (16),
c) einen Scheideteller (18) und einen diesem nachgeschalteten zweiten Greifer (19).

6. Verfahren zum Betreiben eines Klärseparators nach einem der vorstehenden Ansprüche, **dadurch gekennzeichnet, dass** mittels einer Steuerungs- oder Regelungseinrichtung eine Regelung der vom Separator verarbeiteten Produktmenge durch eine Steuerung oder Regelung der Menge an rezirkulierter Produktphase in den Zulauf (2) der Separatortrommel derart erfolgt, dass der Separator unabhängig von Variationen der Zulaufmenge an Milchprodukt unter hydraulisch gleichbleibenden Bedingungen innerhalb des Separators arbeitet, wobei mittels einer Rezirkulation von aus der Separatortrommel abgeleiteter geklärter Milch bei optionaler Rückführung einer Schleppflüssigkeit der Separator im Bereich einer optimalen Klärwirkung betrieben wird.

## Claims

1. Separator (1) for disinfecting raw milk or whey, having a rotatable separator drum (12) with a vertical axis of rotation as well as a disk stack (13) and at least two outlets (17,20) and at least one inlet (2),
**characterized by** two recirculation circuits between the two outlets (17, 20) and the inlet (2) of the separator drum wherein one of the recirculation circuits (6) is designed for recirculating an entraining liquid and the other recirculation circuit (21) is designed for recirculating a portion of the disinfected phase.

2. Separator according to Claim 1,
**characterized in that** one recirculation circuit for recirculating the entraining liquid has a recirculation pipe (6) from the first outlet (20) for entraining liquid to the inlet (2) of the drum and **in that** the second recirculation circuit for recirculating the disinfected milk has another recirculation pipe (5, 21) from the outlet (17) for clarified milk to the inlet (2).

3. Separator according to one of the preceding claims,
**characterized in that** a valve (7, 8), which can be controlled and/or regulated, is in each case integrated in the recirculation pipes (6; 5,21).

4. Separator according to one of the preceding claims,
**characterized by** a controlling or regulating device for keeping the product quantity processed by the separator constant by regulating the flow rate of the recirculation pipes (6; 5, 21).

5. Separator according to one of the preceding claims,
**characterized by**
a. solids discharge openings (14),
b. a first gripper or a centripetal pump (16),
c. a separating disk (18) and a second gripper (19) connected to the output side of the separating disk (18).

6. Method of operating a clarifying separator according to one of the preceding claims,
**characterized in that**, by means of a controlling or regulating device, a regulating of the product quantity processed by the separator takes place by a controlling or regulating of the amount of recirculated product phase into the inlet (2) of the separator drum such that the separator operates independently of variations of the inflow quantity of milk product under hydraulically constant conditions within the separator, the separator being operated within the range of an optimal clarifying effect by means of a recirculation of clarified milk diverted from the separator drum with an optional return of an entraining liquid.

## Revendications

1. Séparateur (1) pour la pasteurisation de lait cru ou de petit lait, comportant un tambour de séparateur rotatif (12) présentant un axe de rotation vertical et un ensemble d'assiette (13) et au moins deux écoulements (17, 20) et au moins une alimentation (2), **caractérisé par** deux commutateurs de recirculation entre les deux écoulements (17, 20) et l'alimentation (2) du tambour de séparateur,
dans lequel l'un des commutateurs de recirculation (6) est conçu pour la recirculation d'un liquide d'entraînement et l'autre des commutateurs de recirculation (21) est conçu pour la recirculation d'une partie de la phase pasteurisée.

2. Séparateur selon la revendication 1, **caractérisé en ce qu'**un commutateur de recirculation pour la recirculation du liquide d'entraînement présente une conduite de recirculation (6) du premier écoulement (20) pour le liquide d'entraînement à l'alimentation (2) du tambour et **en ce que** le deuxième commutateur de recirculation pour la recirculation du lait pasteurisé présente une autre conduite de recirculation (5, 21) de l'écoulement (17) pour le lait purifié à l'alimentation (2).

3. Séparateur selon l'une des revendications précédentes, **caractérisé en ce que**, dans les conduites de recirculation (6 ; 5, 21) est intégrée respectivement une soupape de commande et/ou une soupape réglable (7, 8).

4. Séparateur selon l'une des revendications précédentes, **caractérisé par** un dispositif de commande ou de régulation pour maintenir à un niveau constant la quantité de produit traitée par le séparateur par une régulation de la quantité de débit des conduites de recirculation (6 ; 5, 21).

5. Séparateur selon l'une des revendications précédentes, **caractérisé par**
a) des ouvertures de décharge de solide (14),
b) un premier crochet ou un disque séparateur (16),
c) une assiette de séparation (18) et un deuxième crochet (19) en aval de celle-ci (19).

6. Procédé d'exploitation d'un séparateur de purification selon l'une des revendications précédentes, **caractérisé en ce qu'**au moyen d'un dispositif de commande ou de régulation, une régulation de la quantité de produit traitée par le séparateur par une commande ou une régulation de la quantité de phase de produit recirculé s'effectue dans l'alimentation (2) du tambour de séparateur, de sorte que le séparateur fonctionne indépendamment des variations de la quantité d'alimentation de produit laitier dans des conditions constantes au niveau hydraulique dans le séparateur, dans lequel au moyen d'une recirculation de lait purifié évacué du tambour de séparateur lors d'un retour éventuel d'un liquide d'entraînement, le séparateur est actionné dans la zone d'un effet de purification optimal.
